# EUROPÄISCHE PATENTSCHRIFT

(11) **EP 3 688 693 B1**
(45) Veröffentlichungstag und Bekanntmachung des Hinweises auf die Patenterteilung: **05.07.2023**
(21) Anmeldenummer: 18750127.5
(22) Anmeldetag: 30.07.2018
(51) Int. Cl.: G06Q 10/06, G06Q 50/06, H02J 3/14

(54) **ENERGIEFLUSSSTEUERGERÄT ZUR STEUERUNG EINER LASTVERSCHIEBUNG**
ENERGY FLOW CONTROL DEVICE FOR CONTROLLING A LOAD TRANSFER
APPAREIL DE COMMANDE DE FLUX D'ÉNERGIE POUR LA COMMANDE D'UN DÉLESTAGE

(30) Priorität: 26.09.2017 DE 102017217055
(43) Veröffentlichungstag der Anmeldung: 05.08.2020
(73) Patentinhaber: Robert Bosch GmbH, 70442 Stuttgart (DE)
(72) Erfinder: MUELLER, Niclas, 55270 Zornheim (DE); WURZER, Lukas, 573 28 Tranas (SE)
(86) Internationale Anmeldenummer: PCT/EP2018/070545
(87) Internationale Veröffentlichungsnummer: WO 2019/063162

(56) Entgegenhaltungen:
- DE-A1-102013 214 996
- FISCHER DAVID ET AL: "On heat pumps in smart grids: A review", RENEWABLE AND SUSTAINABLE ENERGY REVIEWS, ELSEVIERS SCIENCE, NEW YORK, NY, US, Bd. 70, 26. November 2016 (2016-11-26), Seiten 342-357, XP029913748, ISSN: 1364-0321, DOI: 10.1016/J.RSER.2016.11.182
- GABRIELLE MASY ET AL: "Smart grid energy flexible buildings through the use of heat pumps and building thermal mass as energy storage in the Belgian context", SCIENCE AND TECHNOLOGY FOR THE BUILT ENVIRONMENT, Bd. 21, Nr. 6, 18. August 2015 (2015-08-18), Seiten 800-811, XP055501792, ISSN: 2374-4731, DOI: 10.1080/23744731.2015.1035590

## Beschreibung

Die vorliegende Erfindung betrifft ein Energieflusssteuergerät nach dem Oberbegriff des Anspruchs 1. Ein solches Energieflusssteuergerät dient zur Steuerung einer Lastverschiebung einer Mehrzahl von an einen Netzanschlusspunkt angeschlossenen Verbrauchern elektrischer Energie in Abhängigkeit von zeitlich veränderlichen Preisen für die am Netzanschlusspunkt bereitstehende elektrische Energie und wird als per se bekannt vorausgesetzt. Unter einer Lastverschiebung wird hier verstanden, dass ein elektrischer Verbraucher bevorzugt dann eingeschaltet wird, wenn elektrische Energie preislich günstig am Netzanschlusspunkt zur Verfügung steht. Das Einschalten der elektrischen Verbraucher erfolgt zum Beispiel bei mit Photovoltaik-Anlagen ausgerüsteten Wohngebäuden um den Eigenverbrauch von selbst erzeugtem Strom zu erhöhen und damit den Strombezug aus dem Netz zu reduzieren. Weil die Einspeisevergütung für den selbst erzeugten Strom geringer ist als der Preis für den aus dem Netz bezogenen Strom, ergibt sich dadurch ein ökonomischer Vorteil für den Energienutzer.

### Stand der Technik

Die DE 10 2013 214996 A1 offenbart eine Vorrichtung zur Lastverschiebung in intelligenten Stromverteilungsnetzen.

Der Artikel von Fischer David et al.: "On heat pumps in smat grids: A review" (RENEWABLE AND SUSTAINABLE ENERGY REVIEWS ELSEVIERS SCIENCE, NEWYORK, NY, US, Bd. 70, 26. November 2016 , Seiten 342 - 357, XP029913748, ISSN: 1364-0321) offenbart eine Review zu Wärmepumpen in Verbindung mit Smart Grids. Hierbei wird insbesondere der COP von Wärmepumpen diskutiert.

Der Artikel von Gabrielle Masy et al. :"Smart grid flexible buildings through the use of heat pumps and building thermal mass as energy storage in the Belgian context" (Science and Technology for the Built Environment, Bd. 21, Nr. 6, 18. August 2015, Seiten 800-811, XP055501792, ISSN: 2734-4731) offenbart beispiele wie sich der COP einer Wärmepumpe über den Tag verteilt verhält.

Ferner wird davon ausgegangen, dass Verbraucher und Erzeuger elektrischer Energie bei bekannten Energieflusssteuergeräten nach einer vom Energienutzer oder dem Hersteller des Energieflusssteuergeräts festgelegten Priorität für das Energiemanagement heran gezogen werden. Der aktuelle Betriebszustand wird dabei vermutlich nicht für die Priorisierung herangezogen.

### Offenbarung der Erfindung

Von diesem Stand der Technik unterscheidet sich die vorliegende Erfindung durch die kennzeichnenden Merkmale des Anspruchs 1.

Das erfindungsgemäße Energieflusssteuergerät ist demnach dazu eingerichtet, relative Effizienzen der Verbraucher miteinander zu vergleichen und die individuellen Lastverschiebungen der Verbraucher in Abhängigkeit von den relativen Effizienzen zu steuern. Dabei ist jede relative Effizienz definiert als eine auf eine aktuelle Effizienz des Verbrauchers normierte Effizienz des Verbrauchers, mit welcher der Verbraucher aktuell mit zur Lastverschiebung vergrößerter elektrischer Last arbeiten würde. Erfindungsgemäß ist das Energieflusssteuergerät dazu eingerichtet, Werte der relativen Effizienzen der angeschlossenen Verbraucher aus den angeschlossenen Verbrauchern auszulesen oder aus von anderen, von den angeschlossenen Verbrauchern bereitgestellten Daten zu bestimmen.

Wenn ein Elektroauto früher oder später geladen wird, oder eine Waschmaschine früher oder später gestartet wird, hat das keinen Einfluss auf die Effizienz des Verbrauchers. Das heißt die relative Effizienz wäre in diesem Fall gleich 1.

Bei einer Wärmepumpe hingegen, kann eine Lasterhöhung nur durch ein Überheizen eines thermischen Speichers erfolgen. Dabei sinkt die Leistungszahl der Wärmepumpe (COP) gegenüber ihrem Normalbetrieb. Die relative Effizienz muss also kleiner als 1 sein und bei steigender Überheizung des Speichers immer kleiner werden. Die relative Effizienz des Heizstabs der Wärmepumpe beträgt Beispielsweise 0,3 wenn der COP des Kompressors "3" beträgt. Der Heizstab macht das gleiche wie der Kompressor (Wasser erwärmen), ist aber im Vergleich dreimal ineffizienter.

Mit den relativen Effizienzen lassen sich unterschiedliche Effizienzen verschiedener Verbraucher für das Energieflusssteuergerät einheitlich darstellen, so dass das Energieflusssteuergerät die Auswirkungen des Einschaltens der individuellen Verbraucher vorab beurteilen kann, ohne dass dafür Detailkenntnisse über die Verbraucher erforderlich sind. Als erwünschte Folge kann das Energieflusssteuergerät eine Rangfolge des Einschaltens der Verbraucher ohne Wissen über den Typ des Verbrauchers/Erzeugers (z.B. Kältekreis einer Wärmepumpe, Heizstab, Batteriespeicher, ...) zu haben. Wenn ein neuer Verbraucher an das Netz des Gebäudes oder ein anderes Netz angeschlossen wird , das weiter unten als inneres Netze bezeichnet wird, kann dies ohne Anpassungen des Energieflusssteuergerätes erfolgen, da dieses durch simple Kenntnis der relativen Effizienz des neu hinzugekommenen Verbrauchers diesen in die Steuerung der übrigen Verbraucher einbeziehen kann. Als Beispiel kann eine dynamische Änderung der Rangfolge abhängig von geänderten Randbedingungen (veränderter Wärmebedarf des Gebäude, Außentemperatur, nächster "Pflichtbetrieb" des Verbrauchers, ...) durch das Energieflusssteuergerät geleistet werden, ohne dass dazu Kenntnisse über Details der angeschlossenen Verbraucher erforderlich sind.

Im Ergebnis wird damit auch der Entwurf von im Energieflusssteuergerät ablaufenden Steuerungsprogrammen vereinfacht. Dies gilt insbesondere für den Entwurf solcher Steuerungsprogramme, mit denen das Energieflusssteuergerät auf geänderte Rahmenbedingungen und sich heterogen verhaltende Verbraucher reagieren kann.

Das erfindungsgemäße Energieflusssteuergerät ist daher sehr flexibel in Bezug auf einen Anschluss neuer Verbraucher an das Energieflusssteuergerät. Es ermöglicht eine optimierte (Kosten-)Effizienz für den Energienutzer, da durch das zeitliche Verschieben von Lasten, d.h. des Einschaltens elektrischer Verbraucher, wenn elektrische Energie gerade günstig zur Verfügung steht, die Energieverbrauchskosten verringert werden können. Dabei werden die Verbraucher stromseitig an das innere Netz angeschlossen, und datenseitig werden sie an das Energieflusssteuergerät angeschlossen. Die Existenz des neuen Verbrauchers muss dem Energieflusssteuergerät bekannt gemacht werden. Dies kann auch automatisch erfolgen ("auto discovery").

Die relative Effizienz ist jeweils ein Kriterium dafür, ob es ökonomisch sinnvoll ist, diesen Verbraucher jetzt oder später einzuschalten. Dadurch, dass das Energieflusssteuergerät auf die beanspruchte Art und Weise Kenntnis von den Verbraucher-individuellen relativen Effizienzen hat, kann es zum Beispiel eine ökonomisch optimale Reihenfolge des Betriebs der elektrischen Verbraucher festlegen und auf Änderungen der Verbraucher-individuellen relativen Effizienzen flexibel reagieren.

Eine bevorzugte Weiterbildung ist, dass das Energieflusssteuergerät die angeschlossenen Verbraucher zusätzlich zu ihrer Abhängigkeit von deren relativen Effizienzen in verschiedene Klassen einteilt.

Durch diese Merkmale ist es für das Energieflusssteuergerät möglich, zu entscheiden welche Lasten zugeschaltet werden sollen. Das Energieflusssteuergerät muss daher nur mit den definierten Klassen umgehen können, ohne tiefere Kenntnis über den Verbraucher haben.

Die elektrischen Verbraucher können sehr heterogen sein. So verhalten sich zum Beispiel Wärmepumpen, die einen Kompressor, einen Heizstab und einen thermischen Speicher aufweisen, anders als Haushaltsgeräte wie Waschmaschinen und Spülmaschinen und auch anders als Energiespeicher von Elektrofahrzeugen und andere Batteriespeicher.

Eine bevorzugte Weiterbildung der Erfindung sieht vor, dass eine erste Klasse durch elektrische Verbraucher gebildet wird, deren Verbrauch nach einem Einschalten einem definierten zeitlichen Verbrauchsprofil folgt, wenn das Startsignal erfolgt (Waschmaschinen, Spülmaschinen).

Weiter ist eine bevorzugte Weiterbildung der Erfindung, dass eine zweite Klasse durch elektrische Verbraucher gebildet wird, die eine definierte Energie bis zu einem definiertem Zeitpunkt benötigen (Laden von Elektroautos).

Eine bevorzugte Weiterbildung der Erfindung ist, dass eine dritte Klasse durch elektrische Verbraucher gebildet wird, bei denen eine elektrische Leistung direkt vorgegeben wird (Wärmepumpe mit Heizstab, Kompressor).

Eine bevorzugte Weiterbildung der Erfindung zeichnet sich dadurch aus, dass das Energieflusssteuergerät die verschiedenen Verbraucher zusätzlich zum in Abhängigkeit von der relativen Effizienz erfolgenden Einschalten in Abhängigkeit von den Klassen, zu denen diese Verbraucher gehören, einschaltet.

Eine bevorzugte Weiterbildung der Erfindung ist, dass das Energieflusssteuergerät dann, wenn elektrische Energie zu einem niedrigen Preis zur Verfügung steht, der niedriger ist als ein zweiter Preis, zunächst Verbraucher der ersten Klasse einschaltet und, wenn dann noch weitere elektrische Energie zu einem niedrigen Preis zur Verfügung steht, Verbraucher der zweiten Klasse einschaltet und, wenn dann noch weitere elektrische Energie zu einem niedrigen Preis zur Verfügung steht, Verbraucher der dritten Klasse einschaltet.

Weiter ist eine bevorzugte Weiterbildung der Erfindung, dass das Energieflusssteuergerät einen Verbraucher nur dann einschaltet, wenn die relative Effizienz dieses Verbrauchers besser ist als das Verhältnis der Preise von aktuell zur Verfügung stehender elektrischer Energie zu später zur Verfügung stehender elektrischer Energie.

Eine bevorzugte Weiterbildung der Erfindung zeichnet sich dadurch aus, dass es die elektrischen Verbraucher zusätzlich in Abhängigkeit von einem Wert eines relativen Nutzerkomforts einschaltet, der definiert ist als ein auf einen aktuellen Komfortwert normierter Komfortwert des Verbrauchers, der sich ergeben würde, wenn der Verbraucher aktuell mit zur Lastverschiebung vergrößerter elektrischer Last arbeiten würde.

Durch diese Weiterbildung der Erfindung wird berücksichtigt, dass ein Einschalten und Abschalten der elektrischen Verbraucher so erfolgt, dass der Energienutzer in seinem Komfort möglichst wenig eingeschränkt ist. Eine Einschränkung könnte zum Beispiel darin liegen, dass Wäsche länger als nötig nass in der Waschmaschine liegt und knittert und/oder dass Wohnräume wärmer oder kälter sind, als gewünscht ist, weil das Energieflusssteuergerät diese Komfortvorgabe bei einer rein auf den ökonomischen Nutzen zielenden Steuerung nur nachrangig berücksichtigt hat.

Weitere Vorteile ergeben sich aus der Beschreibung und den beigefügten Zeichnungen. Ausführungsbeispiele der Erfindung sind in den Zeichnungen dargestellt und werden in der nachfolgenden Beschreibung näher erläutert. Dabei bezeichnen gleiche Bezugszeichen in verschiedenen Figuren jeweils gleiche oder zumindest ihrer Funktion nach vergleichbare Elemente. Bei der Beschreibung einzelner Figuren wird ggf. auch auf Elemente aus anderen Figuren Bezug genommen. Es zeigt in schematischer Form:
- Figur 1: ein Energieflusssteuergerät zusammen mit einem bevorzugten technischen Umfeld, in dem es verwendbar ist; und
- Figur 2: ein Flussdiagramm eines in einem Ausführungsbeispiel eines erfindungsgemäßen Energieflusssteuergerätes ablaufenden Programms.

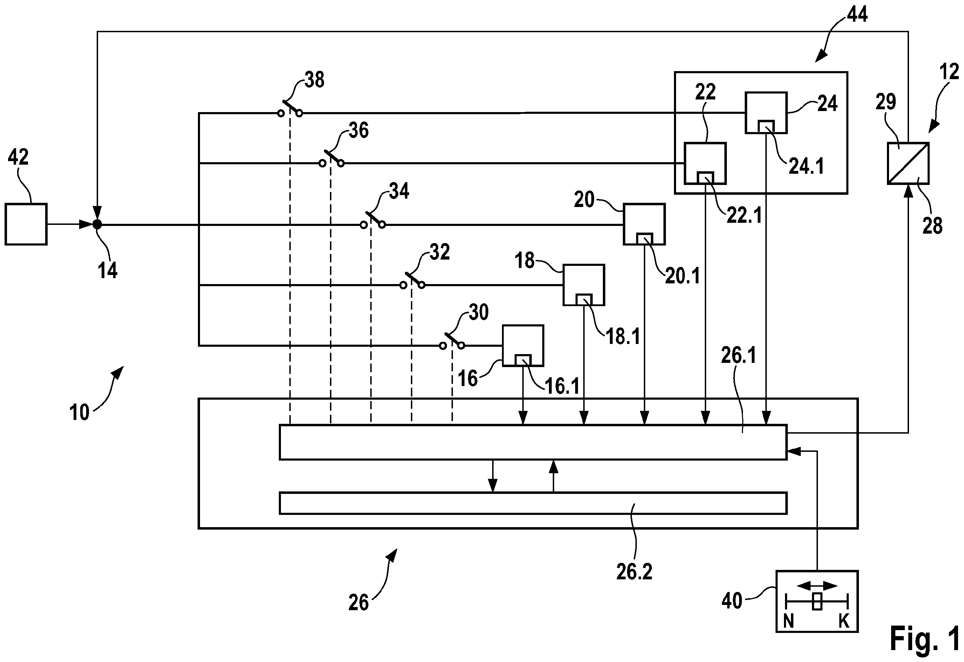

Im Einzelnen zeigt die Figur 1 ein inneres Stromnetz 10, das eine Photovoltaikanlage 12, einen Netzanschlusspunkt 14, verschiedene Verbraucher 16, 18, 20, 22, 24 ein Energieflusssteuergerät 26 verschiedene Schalter 30, 32, 34, 36, 38 und ein Bedienungsteil 40 aufweist. Der Netzanschlusspunkt 14 ist über einen Wechselrichter 28 an stromerzeugende Solarmodule 29 der Photovoltaikanlage 12 und an ein äußeres Stromnetz 42 angeschlossen. Der Anschluss erfolgt zum Beispiel so, dass von der Photovoltaikanlage 12 erzeugter Strom bevorzugt im inneren Stromnetz 10 verbraucht wird und nur eine über die so verbrauchte Menge hinaus erzeugte Überschussmenge in das äußere Stromnetz 42 eingespeist wird. Das innere Stromnetz ist zum Beispiel das Stromnetz eines Wohngebäudes. Das äußere Stromnetz ist zum Beispiel das Stromnetz eines öffentlichen Energieversorgungsunternehmens.

Jeder Verbraucher 16, 18, 20, 22, 24 wird vom Energieflusssteuergerät 26 gesteuert. Dies wird in der Figur 1 durch das Ensemble der Verbraucher-individuellen Schalter 30, 32, 34, 36, 38 symbolisiert, mit denen jeder Verbraucher 16, 18, 20, 22, 24 vom Energieflusssteuergerät 26 individuell zumindest eingeschaltet und ausgeschaltet werden kann. Die Steuerungsmöglichkeiten sollen aber nicht auf eine Ein/Aus-Steuerung beschränkt sein. Es soll gegebenenfalls auch eine Steuerung durch Vorgabe von Sollwerten für die aufzunehmende elektrische Leistung möglich sein.

Die Verbraucher 16, 18, 20, 22, 24 sind zum Beispiel eine Waschmaschine 16, eine Spülmaschine 18, eine aufladbare Batterie 20 eines Elektrofahrzeugs, ein Kompressor 22 einer Wärmepumpe 44 und ein Heizstab 24 der Wärmepumpe. Im eingeschalteten Zustand werden die Verbraucher über den Netzanschlusspunkt 14 mit elektrischer Energie versorgt, die entweder von der Photovoltaikanlage 12 erzeugt wird (Eigenverbrauch) oder die vom äußeren Stromnetz 42 geliefert wird (Netzbezug).

Im dargestellten Beispiel weist jeder Verbraucher 16, 18, 20, 22, 24 zumindest einen Speicher 16.1, 18.1, 20.1, 22.1, 24.1 auf, in dem Werte abgelegt sind, die eine Bestimmung der relativen Effizienz dieses Verbrauchers 16, 18, 20, 22, 24 erlauben. Diese Werte werden in einer Ausgestaltung an das Energieflusssteuergerät 26 übergeben, das daraus für jeden Verbraucher 16, 18, 20, 22, 24 dessen relative Effizienz ermittelt. Bevorzugt ist jedoch, dass die Verbraucher 16, 18, 20, 22, 24 die Werte ihrer relativen Effizienz selbst ermitteln und an das Energieflusssteuergerät 26 übergeben. Im einfachsten Fall reicht dafür jeweils eine Speicherzelle aus, in der ein konstanter Wert der relativen Effizienz abgespeichert ist.

Es gibt aber auch Verbraucher wie den Kompressor 22 der Wärmepumpe 44, deren relative Effizienz nicht konstant ist, sondern vom Arbeitspunkt, im Fall des Kompressors 22, von der Temperatur des zugehörigen Wärmespeichers abhängig ist. Die relative Effizienz des Kompressors 22 nimmt in diesem Fall mit zunehmender Temperatur des Wärmespeichers ab. Für diese Fälle ist bevorzugt, dass der jeweilige Verbraucher den aktuellen Wert seiner relativen Effizienz selbst bestimmt, sei es durch Berechnung oder durch einen Kennfeld- oder Kennlinienzugriff, und an das Energieflusssteuergerät 26 übergibt. Wenn das Energieflusssteuergerät 26 beispielsweise die relative Effizienz von Kompressor 22 und Heizstab 24 als Information von der Wärmepumpe 44 erhält, benötigt das Energieflusssteuergerät 26 kein Wissen mehr darüber, wie sich die relative Effizienz des Kompressors 22 mit der Außentemperatur und/oder der Vorlauftemperatur, also der Temperatur des zugehörigen Energiespeichers, ändert.

Vorzugsweise liest das Energieflusssteuergerät 26 Daten aus den Speichern 16.1, 18.1, 20.1, 22.1, 24.1 der Verbraucher 16, 18, 20, 22, 24 aus und berechnet daraus selbst Werte der relativen Effizienz der Verbraucher 16, 18, 20, 22, 24. Das Energieflusssteuergerät 26 weist einen die Daten der Verbraucher 16, 18, 20, 22, 24 verarbeitenden und die Verbraucher 16, 18, 20, 22, 24 steuernden Prozessor 26.1 auf. Der Prozessor 26.1 arbeitet dabei ein in einem Speicher 26.2 des Energieflusssteuergerätes 26 gespeichertes Programm ab. Zusätzlich kann das Energieflusssteuergerät 26 den Wechselrichter 28 der der Solaranlage steuern. Durch eine solche Steuerung kann zum Beispiel die Einspeisung von Strom der Photovoltaikanlage 12 in das äußere Stromnetz 42 auf einen vorgeschriebenen Maximalwert beschränkt werden (Einspeisebegrenzung).

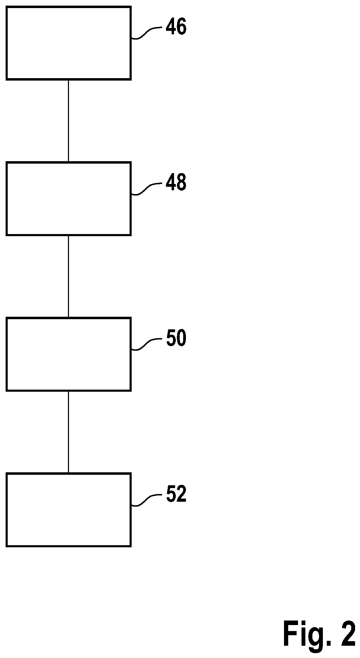

Figur 2 zeigt ein Flussdiagramm als Beispiel eines vom Prozessor 26.1 abgearbeiteten Programms.

In einem Schritt 46 liest das Energieflusssteuergerät 26 Werte der relativen Effizienzen der angeschlossenen Verbraucher 16, 18, 20, 22, 24 aus den Speichern 16.1, 18.1, 20.1, 22.1, 24.1 der angeschlossenen Verbrauchern 16, 18, 20, 22, 24 aus oder bestimmt diese Werte aus anderen, von den angeschlossenen Verbrauchern 16, 18, 20, 22, 24 bereitgestellten Daten.

Im Schritt 48 teilt das Energieflusssteuergerät 26 die angeschlossenen Verbraucher 16, 18, 20, 22, 24 in verschiedene, abstrakte Klassen ein, entsprechend ihrer Charakteristik. Das Energieflusssteuergerät muss daher nur mit diesen definierten Klassen umgehen können. Beispiele solcher Klassen wären Verbraucher, bei denen eine direkte Leistungsvorgabe sinnvoll ist, Verbraucher, die eine definierte Energie bis zu einem definiertem Zeitpunkt benötigen (Laden von Elektroautos), Verbraucher, die einem definierten Verbrauchsprofil folgen, wenn das Statrtsignal erfolgt (Waschmaschinen, Spülmaschinen).

Dabei wird eine erste Klasse zum Beispiel durch elektrische Verbraucher gebildet, deren Verbrauch nach einem durch ein Startsignal erfolgenden Einschalten einem definierten zeitlichen Verbrauchsprofil folgt. Beispiele solcher Verbraucher sind Waschmaschinen und Spülmaschinen.

Eine zweite Klasse wird zum Beispiel durch elektrische Verbraucher gebildet, die eine definierte Energie bis zu einem definiertem Zeitpunkt benötigen. Ein Beispiel eines solchen Verbrauchers ist ein Elektroauto, dessen Speicherbatterie geladen wird.

Eine dritte Klasse wird zum Beispiel durch elektrische Verbraucher gebildet, bei denen eine elektrische Leistung direkt vorgegeben wird. Ein Beispiel eines solchen Verbrauchers ist eine Wärmepumpe mit Kompressor und gegebenenfalls einem Heizstab.

In einem Schritt 50 vergleicht das Energieflusssteuergerät relative Effizienzen der Verbraucher miteinander, um Lastverschiebungen der Verbraucher in Abhängigkeit von zeitlich veränderlichen Preisen für die am Netzanschlusspunkt bereitstehende elektrische Energie zu steuern.

Im Schritt 52 werden dann individuelle Lastverschiebungen der Verbraucher 16, 18, 20, 22, 24 primär in Abhängigkeit von den relativen Effizienzen und zusätzlich in Abhängigkeit von der Klassenzugehörigkeit gesteuert. Lasten mit hoher relativer Effizienz werden bevorzugt zur Lastverschiebung herangezogen, weil der ökonomische Nutzen am größten ist. Die Klassen, ebenso wie die Leistungen der Verbraucher werden verglichen mit der Menge an Leistung die zu dem günstigen Preis zur Verfügung steht. Wenn die Photovoltaikanlage z.B. einen Überschuss von nur 500 W erzeugt, macht es keinen Sinn eine Wärmepumpe einzuschalten, die mindestens 2000 W verbraucht.

Die ergänzend zur in Abhängigkeit von der relativen Effizienz klassenabhängige Steuerung erfolgt zum Beispiel so, dass das Energieflusssteuergerät 26 dann, wenn elektrische Energie zu einem ersten Preis zur Verfügung steht, der niedriger ist als ein zweiter Preis, zunächst Verbraucher der ersten Klasse einschaltet und, wenn dann noch weitere elektrische Energie zu dem niedrigen Preis zur Verfügung steht, Verbraucher der zweiten Klasse einschaltet und, wenn dann noch weitere elektrische Energie zu dem niedrigen Preis zur Verfügung steht, Verbraucher der dritten Klasse einschaltet. Von der Photovoltaikanlage erzeugter Strom ist in der Regel billiger als aus dem äußeren Netz bezogener Strom. Der Preis des von der Photovoltaikanlage erzeugten Stroms entspricht der Einspeisevergütung bei Einspeisung in das äußere Stromnetz 42, da diese Einspeisevergütung bei einem Eigenverbrauch im inneren Stromnetz 10 entfällt.

Als zusätzliche Bedingung gilt, dass ein Verbraucher nur dann eingeschaltet wird, wenn die relative Effizienz dieses Verbrauchers besser ist als das Verhältnis der Preise von aktuell zur Verfügung stehender elektrischer Energie zu später zur Verfügung stehender elektrischer Energie.

Wenn man als Beispiel annimmt, dass die relative Effizienz einer Waschmaschine gleich 1 ist und die relative Effizienz eines Ladevorgangs eines Elektroautos (aufgrund von bei der Ladung auftretenden Verlusten) etwas kleiner als 1 ist und die relative Effizienz des Kompressors einer Wärmepumpe wegen bereits erhöhter Speichertemperatur noch etwas kleiner ist, dann wird das Energieflusssteuergerät zuerst die Waschmaschine nutzen, dann das Elektroauto laden und wenn dann noch günstiger Strom (zum Beispiel von der Photovoltaikanlage 12) zur Verfügung steht, den Kompressor 22 der Wärmepumpe 44 einschalten. Der Heizstab 24 würde im Beispiel nur dann zur Lastverschiebung benutzt werden, wenn Strom zur Verfügung steht, der mindestens um einen Faktor 3 günstiger ist als der Normalpreis und nach dem Einschalten aller effizienteren Lasten immer noch elektrische Leistung zu einem günstigen Preis zur Verfügung steht. Dies wäre zum Beispiel der Fall, wenn aufgrund der Einspeisebegrenzung der Photovoltaikanlage die Leistung des Wechselrichters der Photovoltaikanlage verringert werden müsste, nur damit nicht mehr als (höchsten zulässige) 60% der maximalen Leistung der Photovoltaikanlage in das äußere Netz eingespeist wird. In diesem Fall wäre die überschüssige Leistung sogar gratis und der Einsatz des Heizstabes macht Sinn, wenn keine effizienteren Lasten mehr zur Verfügung stehen.

Als weiteres Beispiel wird im Folgenden ein inneres Netz mit einer Spülmaschine, einem Kompressor einer Wärmepumpe, einem Heizstab der Wärmepumpe und einer Batterie betrachtet. Diese Verbraucher melden nun folgende relativen Effizienzen an das Energieflusssteuergerät:
Die Spülmaschine meldet eine relative Effizienz von 1 an das Energieflusssteuergerät, denn sie wird für die gleiche Leistung (Geschirr spülen) zu jedem Zeitpunkt gleich viel Strom verbrauchen, egal ob sie um 18:00 Uhr läuft oder ob das Energieflusssteuergerät den Start wegen gutem Ertrag der Photovoltaikanlage auf 12:00 Uhr verschiebt (Lastverschiebung).

Der Kompressor der Wärmepumpe meldet eine relative Effizienz von 0,9. Wenn das Energieflusssteuergerät die Wärmepumpe zur Lastverschiebung verwendet, so dass sie aktuell mehr Leistung aufnimmt würde und später dafür weniger Leistung aufnimmt, wird der Wärmespeicher sich über die mindestens nötige Temperatur hinaus erwärmen, was den Wirkungsgrad und damit die relative Effizienz der Wärmepumpe gegenüber dem Normalbetrieb reduziert. Durch die Lastverschiebung benötigt die Wärmepumpe also insgesamt mehr Strom für den gleichen Kundennutzen (warmes Wasser und warmes Haus) weil sie weniger effizient läuft bei höheren Temperaturen. Je extremer die Überheizung des Wärmespeichers ist, desto schlechtere Werte ergeben sich für die relative Effizienz.

Die relative Effizienz des Heizstabs einer Wärmepumpe ist direkt abhängig von der Arbeitszahl des Kompressors der Wärmepumpe. Heizstab und Kompressor erwärmen für den Nutzer das gleiche Wasser, wobei der Heizstab deutlich ineffizienter als der Kompressor ist, welcher im Normalbetrieb allein, d.h. mit ausgeschaltetem Heizstab betrieben wird. Hat der Kompressor eine Arbeitszahl von 2, wird der Heizstab eine relative Effizienz von 0,5 melden.

Die Batterie hat Lade- und Entlade-Verluste, weshalb die relative Effizienz z.B. 0,8 beträgt. In diesem Beispiel gehen 20 % der Energie beim Ladevorgang verloren.

Wenn aktuell ein Stromüberschuss der Photovoltaikanlage vorhanden ist oder ein Netzbezug zu einem niedrigeren Preis als später möglich ist, wird das Energieflusssteuergerät nun zuerst den Verbraucher einschalten, dessen Last (Stromaufnahme) sich am effizientesten verschieben lässt. Im vorliegenden Fall ist das die Spülmaschine. Ist darüber hinaus noch Stromüberschuss verfügbar oder günstiger Netzbezug möglich, wird das Energieflusssteuergerät den Kompressor der Wärmepumpe betreiben. Ist dann immer noch Stromüberschuss vorhanden oder günstiger Netzbezug möglich, oder sinkt die relative Effizienz des Kompressors mit der Zeit unter die relative Effizienz der Batterie, wird die Batterie geladen.

Die Verbraucher werden dabei nur dann angesteuert, wenn ihre relative Effizienz besser ist als das Kostenverhältnis von aktuell vorhandenem Überschussstrom und späteren Netzbezug. Bei einem Preis 30 Cent/kWh für den späteren Netzbezug und 10 Cent/kWh Einspeisevergütung für aktuell vorhandenen Überschussstrom einer Photovoltaikanlage, können nur Lasten mit einer relativen Effizienz von mehr als 0,3 ökonomisch sinnvoll zur Lastverschiebung herangezogen werden. Für das vorliegende Beispiel müsste der Wirkungsgrad des Kompressors unter 3 sinken, damit die relative Effizienz des Heizstabs größer als 0,3 wird und der Heizstab sinnvoll zur Lastverschiebung einzusetzen wäre.

In einem weiteren Ausführungsbeispiel wird das gleiche Konzept für eine Berücksichtigung des Komforts des Energienutzers verwendet. Wenn die aus ökonomischen Gründen erfolgende Lastverschiebung zwar einen ökonomischen Nutzen N ergibt, aber gleichzeitig mit einem geringeren Komfort K für den Energienutzer einhergeht, gibt der Verbraucher ein relatives Komfortsignal aus, da kleiner als Eins ist. Der Verbraucher könnte zum Beispiel eine gefüllte Waschmaschine sein, in der nasse Wäsche länger als nötig liegt. Die Waschmaschine gibt in diesem Fall ein relatives Komfortsignal an das Energieflusssteuergerät aus, das kleiner als Eins ist.

Das Energieflusssteuergerät schaltet die elektrischen Verbraucher in diesem Ausführungsbeispiel zusätzlich in Abhängigkeit von einem Wert eines relativen Nutzerkomforts K ein, der definiert ist als ein auf einen aktuellen Komfortwert normierter Komfortwert des Verbrauchers, der sich ergeben würde, wenn der Verbraucher aktuell mit zur Lastverschiebung vergrößerter elektrischer Last arbeiten würde. Ein weiteres Ausführungsbeispiel sieht das Bedienungsteil 40 vor, das ein Bestandteil des Energieflusssteuergeräts oder ein davon separates Gerät sein kann. Ein solches Bedienungsteil weist in einer Ausgestaltung einen Schieber auf einem berührungsempfindlichen Bildschirm oder einen anders realisierten Schiebeschalter auf, mit dem der Energienutzer die Funktion des Energieflusssteuergerätes stufenlos beeinflussen kann, um zwischen den Polen einer ökonomischen Optimierung (maximaler Nutzen N) und einer Komfort-Optimierung (maximaler Komfort K) seinen Bedürfnissen entsprechend zu wählen.

## Patentansprüche

1. Energieflusssteuergerät (26) zur Steuerung einer Lastverschiebung einer Mehrzahl von an einen Netzanschlusspunkt (14) angeschlossenen Verbrauchern (16, 18, 20, 22, 24) in Abhängigkeit von zeitlich veränderlichen Preisen für die am Netzanschlusspunkt (14) bereitstehende elektrische Energie, **dadurch gekennzeichnet, dass** das Energieflusssteuergerät (26) dazu eingerichtet ist, relative Effizienzen der Verbraucher (16, 18, 20, 22, 24) miteinander zu vergleichen und die individuelle Lastverschiebungen der Verbraucher (16, 18, 20, 22, 24) in Abhängigkeit von den relativen Effizienzen zu steuern, wobei jede relative Effizienz definiert ist als eine auf eine aktuelle Effizienz des Verbrauchers (16, 18, 20, 22, 24) normierte Effizienz des Verbrauchers (16, 18, 20, 22, 24), mit welcher der Verbraucher (16, 18, 20, 22, 24) aktuell mit zur Lastverschiebung vergrößerter elektrischer Last arbeiten würde und dass das Energieflusssteuergerät (26) dazu eingerichtet ist, Werte der relativen Effizienzen der angeschlossenen Verbraucher (16, 18, 20, 22, 24) aus den angeschlossenen Verbrauchern (16, 18, 20, 22, 24) auszulesen oder aus von anderen, von den angeschlossenen Verbrauchern (16, 18, 20, 22, 24) bereitgestellten Daten zu bestimmen.

2. Energieflusssteuergerät (26) nach einem der vorhergehenden Ansprüche, **dadurch gekennzeichnet, dass** es die angeschlossenen Verbraucher (16, 18, 20, 22, 24) zusätzlich zu ihrer Abhängigkeit von deren relativen Effizienzen in verschiedene Klassen einteilt.

3. Energieflusssteuergerät (26) nach Anspruch 2, **dadurch gekennzeichnet, dass** eine erste Klasse durch elektrische Verbraucher (16, 18, 20, 22, 24) gebildet wird, deren Verbrauch nach einem Einschalten einem definierten zeitlichen Verbrauchsprofil folgt, wenn das Startsignal erfolgt.

4. Energieflusssteuergerät (26) nach Anspruch 2, **dadurch gekennzeichnet, dass** eine zweite Klasse durch elektrische Verbraucher (16, 18, 20, 22, 24) gebildet wird, die eine definierte Energie bis zu einem definiertem Zeitpunkt benötigen.

5. Energieflusssteuergerät (26) nach Anspruch 2, **dadurch gekennzeichnet, dass** eine dritte Klasse durch elektrische Verbraucher (16, 18, 20, 22, 24) gebildet wird bei denen eine elektrische Leistung direkt vorgegeben wird.

6. Energieflusssteuergerät (26) nach einem der vorhergehenden Ansprüche, **dadurch gekennzeichnet, dass** das Energieflusssteuergerät die verschiedenen Verbraucher (16, 18, 20, 22, 24) zusätzlich zum in Abhängigkeit von der relativen Effizienz erfolgenden Einschalten in Abhängigkeit von den Klassen, zu denen diese Verbraucher (16, 18, 20, 22, 24) gehören, einschaltet.

7. Energieflusssteuergerät (26) nach Anspruch 6, **dadurch gekennzeichnet, dass** das Energieflusssteuergerät dann, wenn elektrische Energie zu einem ersten Preis zur Verfügung steht, der niedriger ist als ein zweiter Preis, zunächst Verbraucher (16, 18, 20, 22, 24) der ersten Klasse einschaltet und, wenn dann noch weitere elektrische Energie zu dem niedrigen Preis zur Verfügung steht, Verbraucher (16, 18, 20, 22, 24) der zweiten Klasse einschaltet und, wenn dann noch weitere elektrische Energie zu dem niedrigen Preis zur Verfügung steht, Verbraucher (16, 18, 20, 22, 24) der dritten Klasse einschaltet.

8. Energieflusssteuergerät (26) nach einem der vorhergehenden Ansprüche, **dadurch gekennzeichnet, dass** es einen Verbraucher (16, 18, 20, 22, 24) nur dann ansteuert, wenn die relative Effizienz dieses Verbrauchers (16, 18, 20, 22, 24) besser ist als das Verhältnis der Preise von aktuell zur Verfügung stehender elektrischer Energie zu später zur Verfügung stehender elektrischer Energie.

9. Energieflusssteuergerät (26) nach einem der vorhergehenden Ansprüche, **dadurch gekennzeichnet, dass** es die elektrischen Verbraucher (16, 18, 20, 22, 24) zusätzlich in Abhängigkeit von einem Wert eines relativen Nutzerkomforts einschaltet, der definiert ist als ein auf einen aktuellen Komfortwert normierter Komfortwert des Verbrauchers(16, 18, 20, 22, 24), der sich ergeben würde, wenn der Verbraucher (16, 18, 20, 22, 24) aktuell mit zur Lastverschiebung vergrößerter elektrischer Last arbeiten würde.

## Claims

1. Energy flow control device (26) for controlling a load shift of a plurality of consumers (16, 18, 20, 22, 24), which are connected to a network connection point (14), depending on temporally variable prices for the electrical energy available at the network connection point (14), **characterized in that** the energy flow control device (26) is designed to compare relative efficiencies of the consumers (16, 18, 20, 22, 24) with one another and to control the individual load shifts of the consumers (16, 18, 20, 22, 24) depending on the relative efficiencies, wherein each relative efficiency is defined as an efficiency of the consumer (16, 18, 20, 22, 24) that is normalized to a current efficiency of the consumer (16, 18, 20, 22, 24) with which the consumer (16, 18, 20, 22, 24) would be currently operating with an electrical load that is increased for load shifting purposes, and **in that** the energy flow control device (26) is designed to read values of the relative efficiencies of the connected consumers (16, 18, 20, 22, 24) from the connected consumers (16, 18, 20, 22, 24) or to determine them from other data provided by the connected consumers (16, 18, 20, 22, 24).

2. Energy flow control device (26) according to the preceding claim, **characterized in that** said device divides the connected consumers (16, 18, 20, 22, 24) into different classes, in addition to their dependency on their relative efficiencies.

3. Energy flow control device (26) according to Claim 2, **characterized in that** a first class is formed by electrical consumers (16, 18, 20, 22, 24) whose consumption after switch-on follows a defined temporal consumption profile when the start signal is effected.

4. Energy flow control device (26) according to Claim 2, **characterized in that** a second class is formed by electrical consumers (16, 18, 20, 22, 24) that require a defined energy up until a defined time.

5. Energy flow control device (26) according to Claim 2, **characterized in that** a third class is formed by electrical consumers (16, 18, 20, 22, 24) for which an electrical power is directly specified.

6. Energy flow control device (26) according to one of the preceding claims, **characterized in that** the energy flow control device, in addition to the switch-on carried out depending on the relative efficiency, switches on the different consumers (16, 18, 20, 22, 24) depending on the classes to which these consumers (16, 18, 20, 22, 24) belong.

7. Energy flow control device (26) according to Claim 6, **characterized in that,** if electrical energy is available at a first price that is lower than a second price, the energy flow control device first of all switches on consumers (16, 18, 20, 22, 24) of the first class and, if even more electrical energy is available at the low price, switches on consumers (16, 18, 20, 22, 24) of the second class and, if even more electrical energy is available at the low price, switches on consumers (16, 18, 20, 22, 24) of the third class.

8. Energy flow control device (26) according to one of the preceding claims, **characterized in that** said device only actuates a consumer (16, 18, 20, 22, 24) if the relative efficiency of this consumer (16, 18, 20, 22, 24) is better than the ratio of the prices of electrical energy available currently to those of electrical energy available later.

9. Energy flow control device (26) according to one of the preceding claims, **characterized in that** said device additionally switches on the electrical consumers (16, 18, 20, 22, 24) depending on a value of a relative user comfort that is defined as a comfort value of the consumer (16, 18, 20, 22, 24) that is normalized to a current comfort value that would result if the consumer (16, 18, 20, 22, 24) were to be currently operating with an electrical load that is increased for load shifting purposes.

## Revendications

1. Appareil de commande de flux d'énergie (26) permettant de commander un report de charge d'une pluralité de consommateurs (16, 18, 20, 22, 24) connectés à un point de connexion de réseau (14) en fonction de tarifs variables dans le temps pour l'énergie électrique fournie au point de connexion de réseau (14),
**caractérisé en ce que** l'appareil de commande de flux d'énergie (26) est conçu pour comparer entre elles des efficacités relatives des consommateurs (16, 18, 20, 22, 24) et pour commander les reports de charge individuels des consommateurs (16, 18, 20, 22, 24) en fonction des efficacités relatives, dans lequel chaque efficacité relative est définie comme une efficacité du consommateur (16, 18, 20, 22, 24), normalisée sur une efficacité actuelle du consommateur (16, 18, 20, 22, 24), avec laquelle le consommateur (16, 18, 20, 22, 24) fonctionnerait actuellement sous une charge électrique augmentée par rapport au report de charge, et **en ce que** l'appareil de commande de flux d'énergie (26) est conçu pour lire des valeurs des efficacités relatives des consommateurs connectés (16, 18, 20, 22, 24) à partir des consommateurs connectés (16, 18, 20, 22, 24) ou pour les déterminer à partir d'autres données fournies par les consommateurs connectés (16, 18, 20, 22, 24).

2. Appareil de commande de flux d'énergie (26) selon l'une quelconque des revendications précédentes, **caractérisé en ce qu'**il répartit les consommateurs connectés (16, 18, 20, 22, 24) en différentes classes en plus de leur dépendance de leurs efficacités relatives.

3. Appareil de commande de flux d'énergie (26) selon la revendication 2, **caractérisé en ce qu'**une première classe est formée par des consommateurs électriques (16, 18, 20, 22, 24) dont la consommation suit un profil de consommation temporel défini après une mise en circuit lorsque le signal de démarrage est donné.

4. Appareil de commande de flux d'énergie (26) selon la revendication 2, **caractérisé en ce qu'**une deuxième classe est formée par des consommateurs électriques (16, 18, 20, 22, 24) qui nécessitent une énergie définie jusqu'à un instant défini.

5. Appareil de commande de flux d'énergie (26) selon la revendication 2, **caractérisé en ce qu'**une troisième classe est formée par des consommateurs électriques (16, 18, 20, 22, 24) pour lesquels une puissance électrique est spécifiée directement.

6. Appareil de commande de flux d'énergie (26) selon l'une quelconque des revendications précédentes, **caractérisé en ce que** l'appareil de commande de flux d'énergie met en circuit les différents consommateurs (16, 18, 20, 22, 24), en plus de la mise en circuit en fonction de l'efficacité relative, en fonction en fonction des classes auxquelles appartiennent ces consommateurs (16, 18, 20, 22, 24).

7. Appareil de commande de flux d'énergie (26) selon la revendication 6, **caractérisé en ce que** l'appareil de commande de flux d'énergie met d'abord en circuit des consommateurs (16, 18, 20, 22, 24) de la première classe si de l'énergie électrique est disponible à un premier tarif qui est inférieur à un deuxième tarif, et si de l'énergie électrique supplémentaire reste disponible au tarif bas, il met en circuit des consommateurs (16, 18, 20, 22, 24) de la deuxième classe, et s'il reste encore de l'énergie électrique supplémentaire disponible au tarif bas, il met en circuit des consommateurs (16, 18, 20, 22, 24) de la troisième classe.

8. Appareil de commande de flux d'énergie (26) selon l'une quelconque des revendications précédentes, **caractérisé en ce qu'**il pilote un consommateur (16, 18, 20, 22, 24) uniquement si l'efficacité relative de ce consommateur (16, 18, 20, 22, 24) est meilleure que le rapport des tarifs entre l'énergie électrique disponible actuellement et l'énergie électrique disponible ultérieurement.

9. Appareil de commande de flux d'énergie (26) selon l'une quelconque des revendications précédentes, **caractérisé en ce que** qu'il met en circuit les consommateurs électriques (16, 18, 20, 22, 24) en outre en fonction d'une valeur d'un confort utilisateur relatif qui est défini comme une valeur de confort normalisée sur une valeur de confort actuelle du consommateur (16, 18, 20, 22, 24) qui résulterait si le consommateur (16, 18, 20, 22, 24) fonctionnait actuellement sous une charge électrique augmentée par rapport au report de charge.
